# EUROPEAN PATENT SPECIFICATION

(11) **EP 2 090 204 B1**
(45) Date of publication and mention of the grant of the patent: **16.07.2014**
(21) Application number: 08019741.1
(22) Date of filing: 12.11.2008
(51) Int. Cl.: A47J 31/44, A47J 31/36

(54) **Filter carrying body for waffles for coffee making machines**
Filterträger für Kaffeemaschine
Porte-filtre pour machine à cafè

(30) Priority: 16.11.2007 IT PN20070079
(43) Date of publication of application: 19.08.2009
(73) Proprietor: CMA Macchine per caffè S.r.l., 31058 Susegana (TV) (IT)
(72) Inventor: Dal Tio, Nello, 31058 Susegana(TV) (IT)
(74) Representative: Rapisardi, Mariacristina

(56) References cited:
- US-A- 5 343 799
- US-A- 5 398 595
- US-A- 6 026 732

## Description

The invention relates to a filter carrying body for waffles for coffee making machines, adapted to house waffles containing powder of coffee or other kind of beverage to be obtained by infusion, and co-operating with the coffee machine infusion unit so as to obtain the respectively desired infusion beverage.

Filter carrying bodies for coffee making machines are known, each one of them comprising substantially a hollowed circular body supported by a side handle which can be grasped by the user and is provided with a perforated lower filter and in the open cavity thereof a relative waffle is housed, said filter communicating with a spout situated below it for delivering the infused beverage. This circular body is screwed on, after the introduction of the waffle therein, in a position situated below a machine infusion unit and, after that this operation has been performed, through the filter carrying body the hot water is circulated, which water has been heated into one or more boilers contained into the same machine, in a manner that by passing through the waffle it is formed the coffee or an infused beverage of other kind, and that such beverage passes through the filter and the spout situated below it and is delivered into the cup or receptacle of other kind arranged below such spout. However, the filter carrying bodies of this type have the drawback do not allow to prepare the coffee or other infused beverages in an optimum manner, in that during the infusion step the hot water is being passed through the waffle in rapid times, and with a not uniform distribution and pressure thereof, which do not allow to submit all the powdered substance to the respectively required heating temperature and infusion pressure, in order to obtain infused beverages with the better qualitative characteristics and the better taste.

Moreover, the filter carrying bodies of this kind lend themselves to employ only the traditional paper waffles, which are permeable to the hot water passage, while they do not allow waffles of plastic materials to be employed, which waffles need to be perforated for hot water passage, and such holes may not be realized in the same waffles in that such filter carrying bodies are unprovided with suitable drilling devices. US 5343799 discloses a device according to preamble of claim 1. The object of the present invention is to eliminate the applicative drawbacks and limits of the present coffee machine filter carrying bodies, by means of a filter carrying body according to the invention, adapted to permit to obtain the coffee or the infused beverages of other kind with the better qualitative characteristics and the better taste.

This filter carrying body is realized with the structural characteristics substantially described with particular reference to the attached patent claims.

The invention will be understood better by the following description, by way of a not limitative example and with reference to the accompanying drawings, wherein :
- Figs. 1 and 2 show respectively a schematic side view and a plan view of a filter carrying body according to the invention, built in into an infusion unit of a coffee making machine ;
- Fig. 3 shows a side view of the filter carrying body referred to, cutaway along the line A-A of Fig. 2, and displaced into an operative position thereof ;
- Fig. 4 shows, with the same view of Fig. 3, the present filter carrying body disassembled from the coffee making machine, and displaced into another operative position thereof;
- Figs. 5 and 6 show a respective side and a plan view of the filter carrying body of Fig. 4 ;
- Figs. 7 and 8 show a respective perspective side and exploded front view of the filter carrying body according to the invention, with the various disassembled component parts thereof ;
- Figs. 9, 10 and 11 show a respective front view, a view from below and a side view of a component part of the filter carrying body according to the invention ;
- Fig. 12 shows a front view of another component part of the present filter carrying body ;
- Fig. 13 shows a partially cutaway front view of the present filter carrying body, on a first handling step thereof, in which it is disassembled with respect to the coffee making machine ;
- Fig. 14 shows a plan view of the filter carrying body of Fig. 13 ;
- Fig. 15 shows a partially cutaway front view of the present filter carrying body, on a second handling step thereof, in which it is coupled in the coffee making machine ;
- Fig. 16 shows a plan view of the filter carrying body of Fig. 15 ;
- Fig. 17 shows a partially cutaway front view of the present filter carrying body, on a third handling step thereof;
- Fig. 18 shows a plan view of the filter carrying body of Fig. 17 ;
- Fig. 19 shows a partially cutaway front view of the present filter carrying body, on a fourth handling step thereof;
- Fig. 20 shows a plan view of the filter carrying body of Fig. 19.

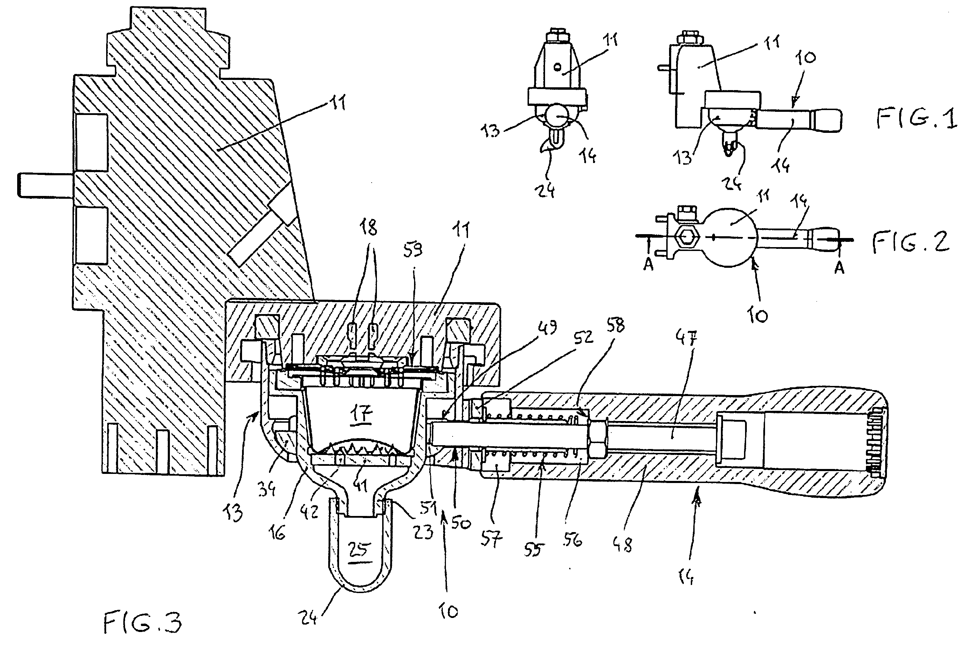

The above Figures schematically illustrate a filter carrying body 10 for waffles for coffee making machines, according to the present invention, adapted to house a corresponding waffle containing the powder of coffee or other kind of beverage to be obtained by infusion, and co-operating with the infusion unit 11 of a coffee making machine (not shown), through which the hot water heated at the respectively selected temperature is passed, which temperature depends on the type and the quality of the infused beverage to be obtained, and the heating is effected into one or more boilers contained into the same machine, in order to obtain the respectively desired infused beverage, which falls downwards for being delivered into the cup or the receptacle of other kind arranged on the underlying position. In this kind of filter carrying body, the waffle may be constituted by an envelope of permeable paper, employed also in the present filter carrying bodies of traditional type, as well as an envelope of plastic material, which during the infusion is perforated as it will be described so as to allow the hot water passage through the waffle and to get the infused beverage. As visible from Figs. 1-4, in which it is shown the present filter carrying body 10 built in into the lower part of the infusion unit 11 and displaced in the operative infusion position thereof, it is noted that such filter carrying body is substantially constituted by a hollowed circular body 13, supported by a side handle 14 which can be grasped by the user and delimits an inner cavity 15, open at its upper side, in which a movable filter carrying body 16 shaped as it will be described is removably inserted, which is adapted to house a relative waffle at a time, which in the illustrated example is constituted by a frusto-conical shaped waffle 17 made of plastic material, said filter carrying body being also shaped for being able to house a set of removably component parts which will be described, which are provided for determining the raising and lowering of the waffle and for perforating this latter in the upper and lower walls thereof, in the manner and with the steps which will be described hereinafter. On this position, the upper part of the circular body 13 is coupled with a bayonet joint to the lower part of the infusion unit 11, while in turn the inner cavity 15 of the circular body 13 of the filter carrying body 10 and the waffle 17 housed into the movable filter carrying body 16 arrange themselves below the hot water circulating conduits 18, passing internally such infusion unit 11 and joined to the relative boiler (s) (not shown) of the coffee machine.

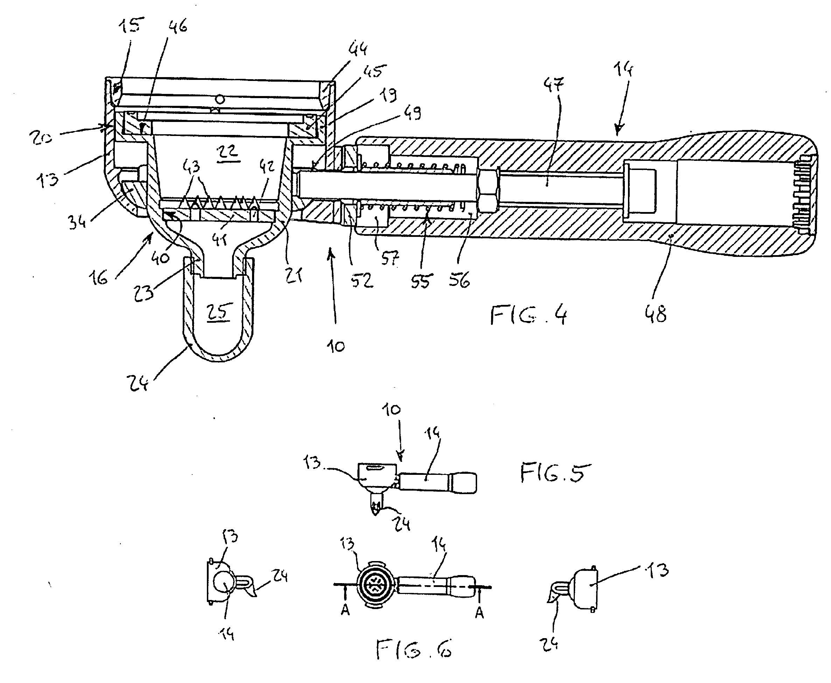

As visible also from the Figs. 4-8, in which the present filter carrying body 10 disassembled from the coffee machine infusion unit 11 is shown, which is displaced into another operative position thereof and with its different component parts housed in the inner chamber 15 of the same filter carrying body, it is noted that the movable filter carrying body 16 is shaped internally with steps, with a thin upper cylindrical portion 19 defining an upper through cavity 20, with an underlying further lower cylindrical portion 21 joined to the preceding cylindrical portion and having a diameter smaller than the same, defining an additional through cavity 22 having a diameter smaller than the previous cavity, and with a short vertical mouthpiece 23 projected downwards from such lower cylindrical portion 21 and joined to an underlying delivery spout 24, defining an inner cavity 25 for the passage of the infused beverage which has been obtained.

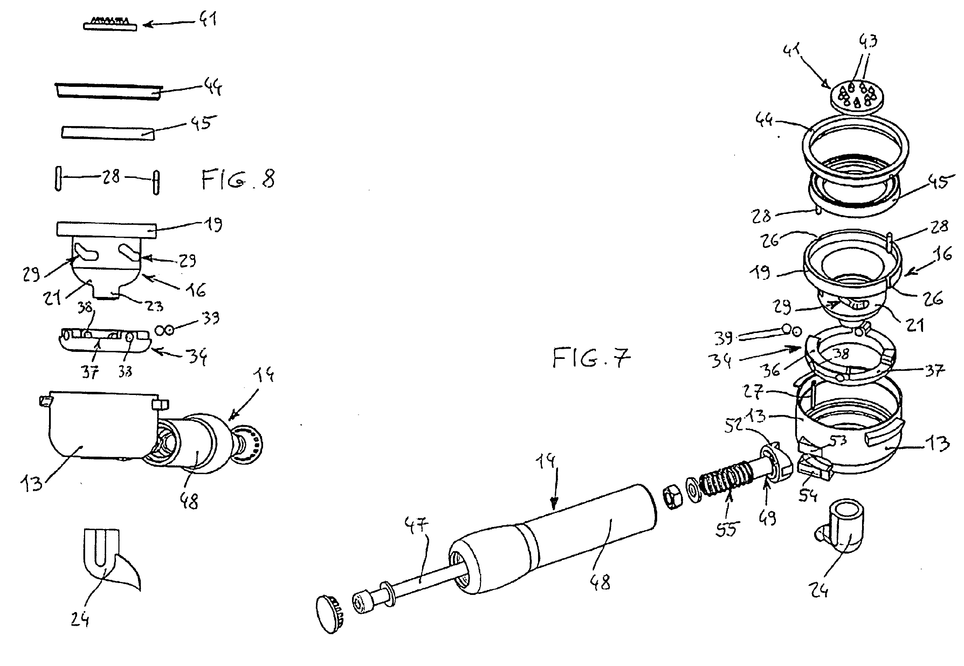

Such movable filter carrying body 16 can be inserted into the inner cavity 15 of the circular body 13 of the filter carrying body 10, up to a pre-established inner position which will be defined later, in a manner that said movable filter carrying body is supported by such circular body and cannot be displaced downwards, and the through cavity 22 of the lower cylindrical portion 21 of said movable filter carrying body is shaped for housing a corresponding waffle, made of paper or plastic material. In the example illustrated by the Fig. 4, such through cavity 22 is shaped with a frusto-conical shape tapered downwards, in order to be able to house a corresponding frusto-conical shaped waffle, marked with the reference numeral 17 in the Fig. 3, or also a paper waffle of traditional type (not visible). As visible also from the Figs. 7, 8 and 12, on to the outer surface of the upper cylindrical portion 19 of the movable filter carrying body 16 there are provided two vertical rectilinear grooves 26, spaced away angularly of 180° from each other, and coinciding with two corresponding vertical rectilinear grooves 27 provided along the inner wall of the circular body 13 of the filter carrying body 10, in a manner that when said movable filter carrying body is inserted into said circular body, the grooves define to each other respective cavities in which a corresponding pin 28 is inserted, and under this condition the movable filter carrying body 16 is secured to the stationary circular body 13 and cannot rotate with respect thereto, but on the contrary it may displace itself in a vertical direction only, from a lowered to a raised position thereof, and vice versa. In turn, in the lower vertical portion 21 of the movable filter carrying body 16 there are provided four identical grooves 29, equally angularly spaced away to each other and situated at the same height along such outer surface and provided for the function which will be described. Each groove 29 is formed by a short horizontal rectilinear portion 30 and a rectilinear portion inclined upwards 31, terminating with a respective curved surface 32 and 33, and the function of each groove is to determine the raising and the lowering of the movable filter carrying body 16, and therefore also of the waffle contained into its inner through cavity 22, and such raising and lowering movement of said movable filter carrying body is obtained as it will be described. The movable filter carrying body 16 is inserted into the inner cavity 15 of the circular body 13 by means of a corresponding thin internal fifth wheel 34 shaped as a circular ring, which is laid on to and supported by the drilled flat bottom 35 of the inner cavity 15 of the circular body 13 and is adaptable with its outer circular surface into the same inner cavity and with its inner circular surface around the lower cylindrical portion 21 of the movable filter carrying body 16. Such fifth wheel 34 is shaped along its peripheral surface with a set of relieves 36, joined to each other by recesses 37, and into which some seats 38 are provided for housing at least two corresponding idle rotating balls 39, acting the one against the groove 29 of the outer surface of the lower cylindrical portion 21 of the movable filter carrying body 16 and the other one against an inner race (not shown) provided internally the hollow cylindrical body 13, so as to permit the rotation of the fifth wheel 34 and the frictionless sliding of the movable filter carrying body 16 from its lowered position to its raised position, and vice versa.

The inner cavity 22 of the lower cylindrical portion 21 of the movable filter carrying body 16 is shaped with a lower step 40, for supporting and housing a corresponding thin circular disc 41, provided with thin through holes 42, and on to the upper surface of which there are provided several sharp tips 43 having conical shape, internally drilled and turned upward and disposed close to each other and distributed almost for the entire disc upper surface, the function of which is that to drill in the manner and with the steps which will be described the lower wall of each waffle, so as to permit the passage through the through holes 42 and the holes of the tips 43 of the infused beverage obtained by letting hot water to pass through the same waffle.

In the movable filter carrying body 16 so inserted into the inner cavity 15 of the cylindrical body 13 it is applied and overlying centering ring 44, for the coupling with the overlying infusion unit 11, and on to the same it is also applied a thin annular gasket 45, which is arranged on to and pressed against an inner flat step 46 provided in the upper cylindrical portion 19 of the movable filter carrying body and defined between the upper through cavity 20 and the lower through cavity 22 of the same movable filter carrying body. By referring again to the Figs. 3, 4, 7 and 8, in which also the handle 14 of the filter carrying body according to the invention is shown, it is noted that such handle is constituted substantially by a cylindrical rectilinear shank 47, housed into a cylindrical hand grip 48 made of plastic or wood, which can be grasped by the user, and provided with a threaded portion 49 on the end portion turned toward such filter carrying body, penetrating through a side through opening 50 of the cylindrical body 13 and which can be screwed into a threaded through hole 51 of the fifth wheel 34 (see Fig. 4), in a manner that such movable filter carrying body may be lowered or raised when the handle 14 is displaced in the different operative steps which will be described. In turn, on to the threaded shank portion 49 is moreover secured a cam 52, acting by friction against two corresponding inclined planes 53 and 54, secured to the outer surface of the cylindrical body 13, during the handling steps of the filter carrying body, and such threaded portion is wound by a spring 55, housed into a corresponding short enlarged through hole 56, shaped with an enlarged mouthpiece 57 for housing the cam 52, and the end portions of said spring bear respectively against the cam 52 and a step 58 in the inside of the hand grip 48, in a manner that such spring may be compressed or not compressed into this seat by the handle 14, when this is displaced into the different operative positions which will be described.

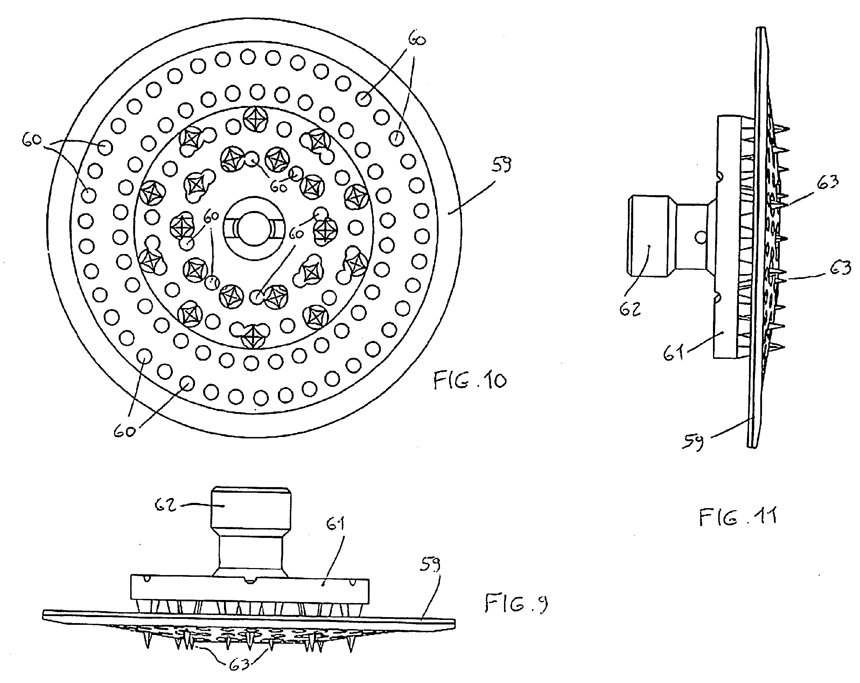

By referring now to the Figs. 9-11, shown therein is a thin perforated circular disc 59 which is secured to the lower part of each infusion unit of the coffee making machine, in correspondence of the hot water circulating conduits of such unit, said flat disc being provided with a plurality of through holes 60 distributed evenly for the entire width thereof for permitting the hot water passage, and being joined at its upper part with a further central circular disc 61 shaped with a short threaded shank 62 directed upward, adapted to be screwed on into a corresponding threaded hole (not shown) provided into said infusion unit lower part. Such further circular disc 61 is also provided with a plurality of sharp tips 63 directed downward, distributed for the entire width of the same disc and passing through corresponding through holes 60 of the preceding disc, in a manner to be projected downward beyond the lower surface of this latter disc.

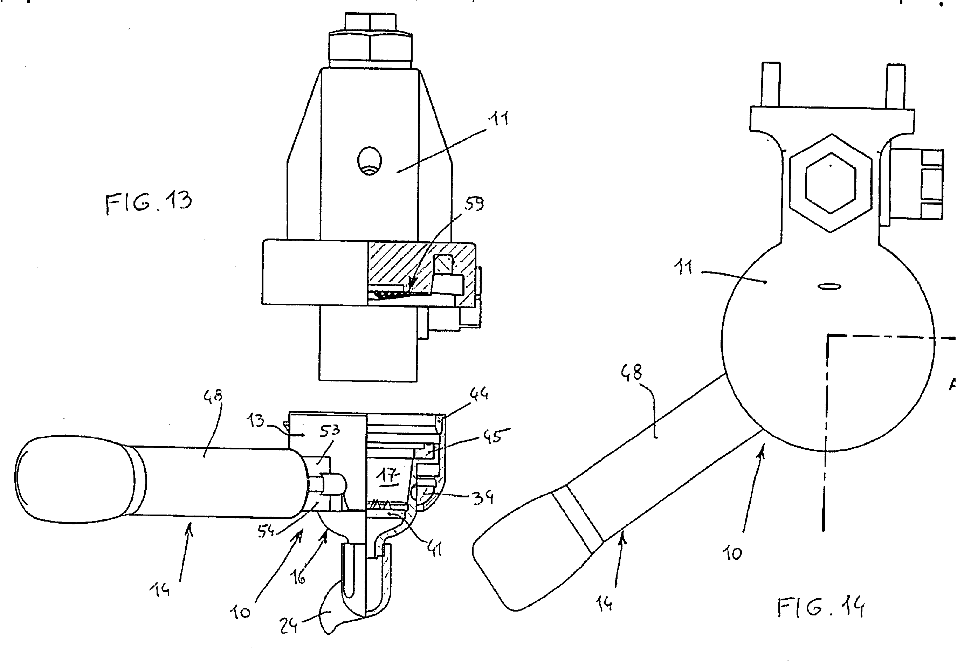

The purpose of such sharp tips 63 is to perforate, in the manner and with the operative steps which will be described, the upper wall of each waffle housed into the inner cavity 22 of the movable filter carrying body 16, so as to allow the hot water to pass through the same waffle and to deliver consequently the infused beverage. By considering the Fig. 4 again, in which it is shown the present filter carrying body disassembled from the infusion unit 11 of the coffee making machine, and with all its component parts which are assembled, it is noted that the movable filter carrying unit 16 is inserted into the inner cavity 15 of the circular body 13 and, through the fifth wheel 34, is locked vertically in position thanks to the fact to be laid on to the balls 39 housed into the same fifth wheel. By considering the Fig. 3 again, in which it is shown the present filter carrying body assembled to the lower part of an infusion unit 11 of the coffee making machine, and with its all component parts which are reciprocally assembled, and a waffle 17 housed into the inner cavity 22 of the movable filter carrying body 16, it is noted that in this position the waffle is situated exactly under the perforated disc 61, and that the tips 63 have perforated the upper wall of the same waffle, so that the waffle is set for being crossed by the hot water as soon as the infusion cycle is started, so as to deliver the infused beverage. In the remaining Figs. 13-20 there are shown now the different handling steps of the present filter carrying body, and the relative movements which are effected by its component parts so as to obtain the desired infused beverages.

In particular, in the first operative step shown in the Figs. 13 and 14 it is noted that the filter carrying body, with its various component parts which are assembled and a waffle 17 housed into the movable filter carrying body 16, is disassembled with respect to the infusion unit 11 of the coffee making machine, and in such position the handle 14 is displaced initially fully into an inclined left position, under the condition in which the fifth wheel 34 is displaced in the position determined by the contact between the balls 39 and the curved surface 33 of the inclined rectilinear portion 31 of the groove 29 and in which the movable carrying body 16 is lowered and the waffle 17 is laid with its lower wall on to the relative tips 43 of the lower disc 41, without perforation of such lower wall by the same tips.

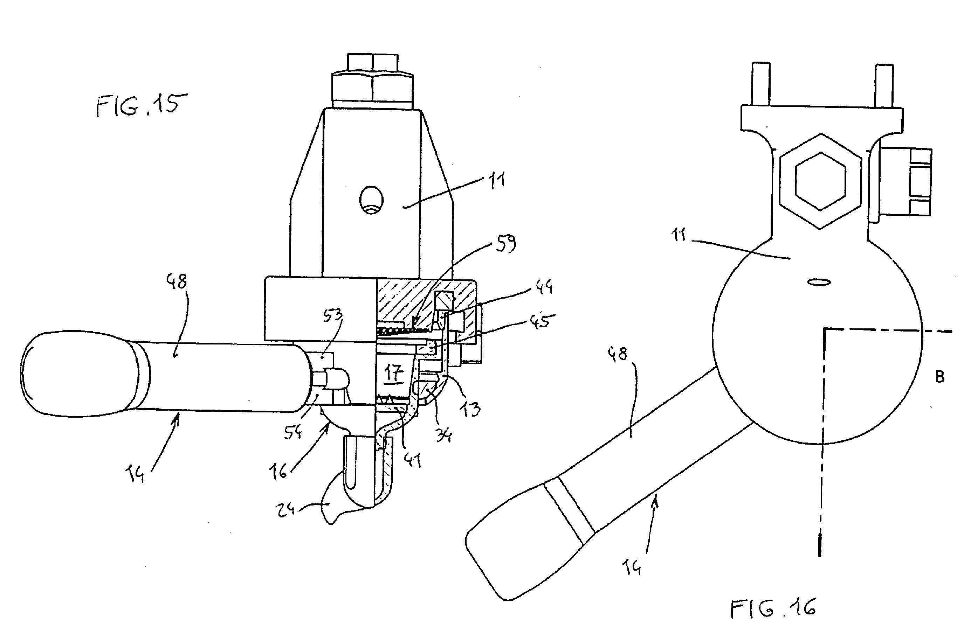

In the second operative step shown in the Figs. 15 and 16, it is noted that the filter carrying body is disposed below the lower part of the infusion unit 11 of the coffee making machine, so as to sets itself for being coupled with respect to the same unit, and in this position the handle 14 is still displaced in the preceding starting position, under the condition in which the movable filter carrying body 16 is still lowered and the waffle 17 is positioned below the upper disc 61 of the infusion unit, with its upper and lower walls which are laid on the relative tips 63 of such upper disc and the relative tips 43 of the lower disc 41, without perforation of such walls by the same tips.

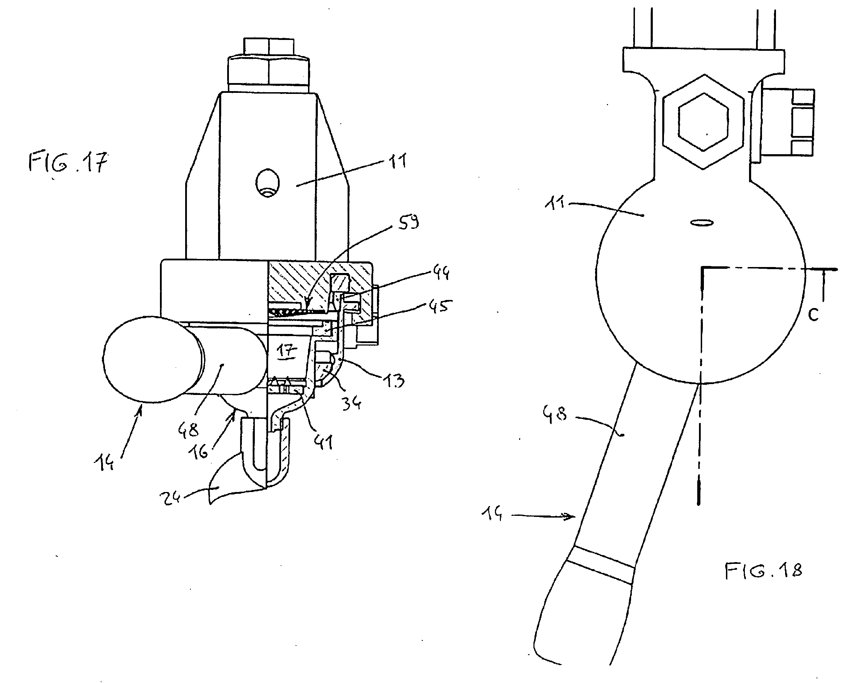

In the third operative step shown in the Figs. 17 and 18, it is noted that the filter carrying body is assembled and coupled with respect to the infusion unit 11, and in such position the handle 14 is slightly displaced rightward in a less inclined position, so as to couple the circular body 13 below the infusion unit 11, under the condition in which the parts are fully coupled to each other and the upper and lower walls of the waffle 17 aren't perforated.

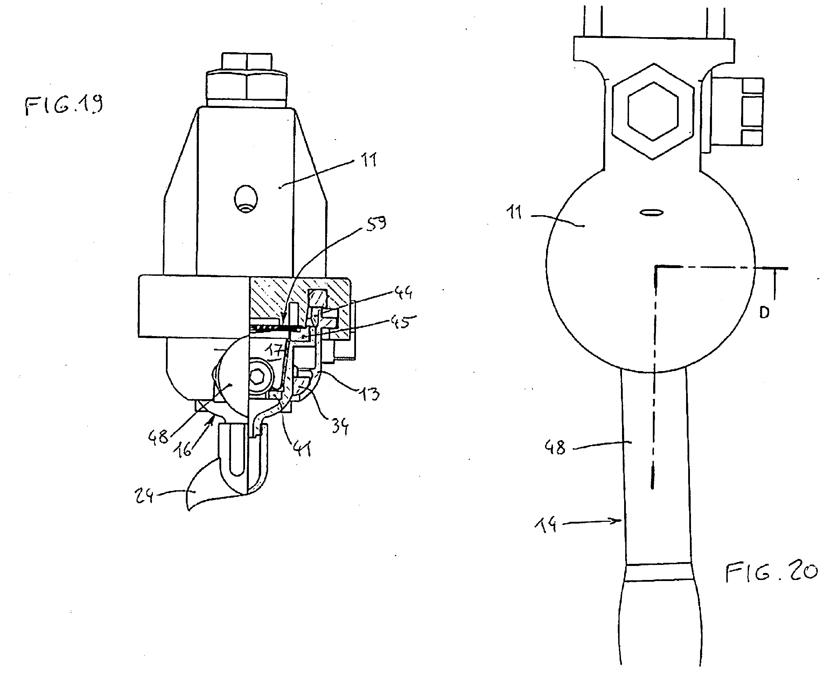

In the fourth operative step shown in the Figs. 19 and 20, it is noted that the handle 14 of the filter carrying body 16 has been additionally displaced rightward, with a rotation which is possible only after that the counter-force of the spring 55 has been exceeded, which pushes the cam 52 against the inclined planes 53 and 54 and therefore looses the handle 14 from the hollow circular body 13.

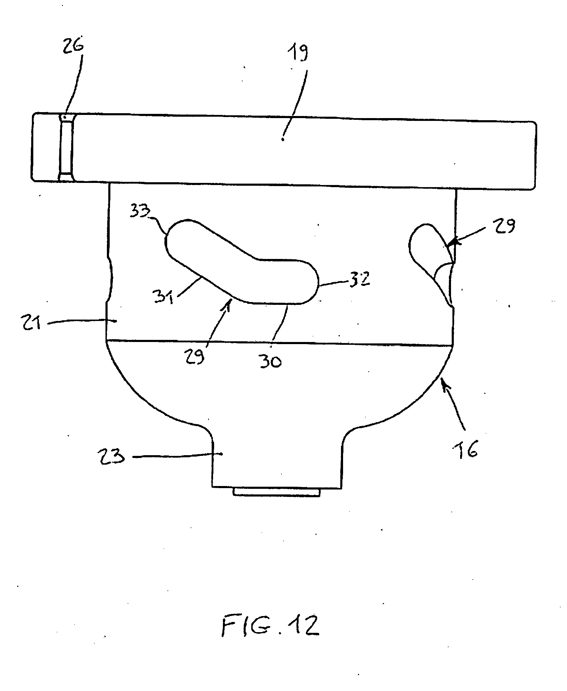

The further rotation up to the operative position referred to acts on to the fifth wheel 34 only, by forcing the balls 39 to slide in the grooves 29 of the movable filter carrying body 16, from the starting position 33 to the final position 32 thereof (see fig.12). Since the movable filter carrying body 16 cannot rotate due to the presence of the pins 28, it is forced to raise itself during the rotation of the fifth wheel 34. When the operation is terminated, the raising of the movable filter carrying body 16 guarantees that the upper wall of the waffle 17 be perforated, owing to the action of the sharp tips 63 of the upper disc 61. Under this circumstance, the waffle is set for preparing the infused beverage and, as soon as the selected infusion cycle has been started, hot water passes through the holes provided in the waffle entering the same waffle and remaining therein for a time enough to determine a homogeneous infusion operation. The pressure of the hot water introduced in the waffle 17 causes the lower wall of the same waffle to be expanded, which is so pushed against the tips 43 of the lower disc 41, by perforating itself and therefore allowing the so produced infused beverage to be discharged and delivered, through the spout 24. When the cycle is ended, the filter carrying body referred to is displaced with a set of reverse operations up to the starting position of Figs. 13 and 14, and the exhausted waffle is extracted and replaced with a new waffle, so as to perform a subsequent infusion cycle with the same described sequences.

Thanks to the fact of utilizing waffles made of plastic of closed type, which are crossed by hot water at the desired temperature, which continue to remain in the interior of the same waffle for determinate times and pressures, there is produced an optimum infusion and the infused beverages are obtained with better characteristics of quality and taste with respect to those obtained with the present filter carrying bodies. Besides, this filter carrying body allows to utilize such waffles in the coffee making machines of professional type, which are normally used only in the coffee making machines for not professional uses. Finally, this filter carrying body operates in a simpler manner and is constituted by less component parts with respect to those employed in the coffee making machines at the present on the market.

## Claims

1. Coffee machine comprising an infusion unit and a filter carrying body for waffles, adapted to house a corresponding waffle made of plastic material or paper containing the powder of coffee or other kind of beverage to be obtained by infusion, and co-operating with the infusion unit of the coffee making machine, supplied by water heated at the required temperature into at least one machine boiler, which water is passed through the waffle for obtaining the relative infused beverage which is delivered into an underlying receptacle, further being provided a hollowed body (13) supported by a side handle (14) which can be grasped by the user and delimiting an inner cavity (15) open at its upper part, which may be coupled removably below said infusion unit (11), and a movable filter carrying body (16) insertable through said inner cavity (15) and delimiting an inner cavity (22) adapted to hold a waffle (17), said handle (14) being displaceable into different operative positions below said infusion unit (11), and co-operating with said movable filter carrying body (16) in a manner to displace this latter in a vertical direction into said inner cavity (15), from a starting lowered position to a terminal raised position thereof together with the waffle (17), and vice versa, said infusion unit (11) being provided with upper perforating means (59, 63) of the upper wall of the waffle (17) and said movable filter carrying body (16) being provided with lower perforating means (41, 43)) of the lower wall of the same waffle, said movable filter carrying body (16) having an initial condition uncoupled from said infusion unit (11) and displaced in the starting lowered position thereof, so as to introduce a waffle into its inner cavity (22), and a further condition coupled below said infusion unit (11), by displacing said handle (14) into another position thereof, under the condition in which the upper and lower walls of the waffle (17) aren't perforated by the relative upper perforating means (59, 63) and lower perforating means (41, 43), and said handle (14) having a further position thereof, under the condition in which said movable filter carrying body (16) is displaced into a raised position thereof, in which said upper wall of the waffle (17) is perforated by said upper perforating means (59, 63), so as to arrange the machine for preparing the infused beverage, so that when an infusion cycle is started hot water penetrates through the waffle, and continues to remain therein for a determinate time for preparing the infused beverage and the hot water pressure into the waffle pushes the lower wall of this latter against said lower perforating means (41, 43), thereby perforating such wall and discharging and delivering downward the infused beverage which has been obtained, said movable filter carrying body (16) further having a displaced condition, when each infusion cycle is ended, again in the starting lowered position thereof, loosen from said infusion unit (11), so as to extract the exhausted waffle and replace it with a new waffle for a subsequent infusion cycle, **characterized in that** said movable filter carrying body (16) is shaped with steps, with a thin upper cylindrical portion (19) and an underlying lower cylindrical portion (21) joined to the preceding cylindrical portion and having diameter smaller than the same, which are housed into said inner cavity (15) of said hollowed body (13), and a short vertical mouthpiece (23) extended downward from said lower portion (21) and is coupled with an underlying spout (24) for delivering the infused beverages, said movable filter carrying body (16) being introduced into said inner cavity (15) through a fifth wheel (34), also inserted into said inner cavity (15), and supported below the movable filter carrying body, which is adaptable with its outer circular surface into the same inner cavity and with its inner circular surface around said lower cylindrical portion (21).

2. Coffee machine according to claim 1, **characterized in that** into said movable filter carrying body (16) inserted into said inner cavity (15) it is applied an overlying centering ring (44), for the coupling with the overlying said infusion unit (11), and onto the same it is also applied a thin annular gasket (45), which is arranged on to and pressed against an inner flat step (46) provided on to said upper cylindrical portion (19) of the movable filter carrying body (16), and defined between the upper through opening (20) and the lower through opening (22) of the same filter carrying body.

3. Coffee machine according to claim 2, **characterized in that** on to the outer surface of said upper cylindrical portion (19) of said movable filter carrying body (16) there are provided two vertical rectilinear grooves (26), spaced away angularly of 180° from each other, and coinciding with two corresponding vertical rectilinear grooves (27) provided along the inner wall of said circular body (13), in a manner that when said movable filter carrying body (16) is inserted into said circular body (13), the grooves define between them respective cavities in which a corresponding pin (28) is inserted, so as to secure said movable filter carrying body (16) to said stationary circular body (13), by preventing its rotation and allowing only the displacement in the vertical direction from its lowered to its raised position, and vice versa.

4. Coffee machine according to claim 3, **characterized in that** on to said lower cylindrical portion (21) of said movable filter carrying body (16) there are provided four identical grooves (29), equally spaced away angularly from each other and situated at the same height along such outer surface, wherein each groove (29) is formed by a short horizontal rectilinear portion (30) and a rectilinear portion inclined upward (31), terminating with a respective curved surface (32, 33).

5. Coffee machine according to claim 4, **characterized in that** said fifth wheel (34) is shaped along its peripheral surface with a set of relieves (36) housing at least two idle rotating balls (39), and some recesses (37) joined to said relieves (36), said balls (39) acting the one against said grooves (29) and the other one against an inner race of said hollowed cylindrical body (13), so as to allow the rotation of said fifth wheel (34) and the frictionless sliding of said movable filter carrying body (16) from its lowered to its raised position, and vice versa, during the displacement of said handle (14) into its various operative positions.

6. Coffee machine according to claim 5, **characterized in that** said handle (14) is constituted by a rectilinear shank (47) housed into a hand grip (48) and provided with a threaded portion (49) on the end portion turned toward the same movable filter carrying body, which penetrates through a side through opening (50) of said hollowed body (13) and is screwed into a threaded through hole (51) of said fifth wheel (34).

7. Coffee machine according to claim 6, **characterized in that** said rectilinear shank (47) is secured to said handle (14) and its threaded portion (49) is secured to a cam (52), acting by friction against two corresponding inclined planes (53, 54), secured to the outer surface of said hollowed body (13) during the handling of the filter carrying body, said shank threaded portion (49) being wound by at least a spring (55) housed into a corresponding short enlarged through hole (56) of said hand grip (48), shaped with an enlarged mouthpiece (57) for housing said cam (52), said spring (55) bearing with its end portions against said cam (52) and a step (58) inside said hand grip (48), the arrangement being such that when said handle (14) is displaced in the direction opposite to the initial one, with a rotation which is made possible only after that the counter-force of said spring (55) has been exceeded, which pushes said cam (52) against said inclined planes (53, 54), and therefore looses said handle (14) from said hollowed body (13), the consequent rotation of said fifth wheel (34) forces said balls (39) to slide into said grooves (29), up to the final position (32), in which said movable filter carrying body (16) is raised thanks to said pins (28) preventing its rotation, and such raising determines the perforation of the upper wall of said waffle (17) by said upper perforating means (59, 63).

8. Coffee machine according to claim 7, **characterized in that** said upper perforating means are constituted by a thin circular disc (59) secured to the lower part of said infusion unit (11), in correspondence of its hot water circulating conduits (18), and provided with a plurality of through holes (60) adapted to be crossed by the hot water, and provided with a plurality of sharp tips (63) directed downward, adapted to perforate the upper wall of said waffle (17).

## Patentansprüche

1. Kaffeemaschine, umfassend eine Brüheinheit und einen Filterträgerkörper für Pads, ausgelegt, um ein entsprechendes Pad aus Kunststoffmaterial oder Papier aufzunehmen, enthaltend Kaffeepulver oder Pulver eines anderen, durch Brühen herzustellenden Getränks, und kooperierend mit der Brüheinheit der Kaffeemaschine, gespeist mit Wasser, erhitzt auf die gewünschte Temperatur in mindestens einem Maschinenkessel, wobei das Wasser durch das Pad strömt, um das entsprechende gebrühte Getränk zu erhalten, das an einen darunter befindlichen Behälter geliefert wird, zudem versehen mit einem Hohlkörper (13), getragen von einem Seitengriff (14), der vom Nutzer gegriffen werden kann, und abgrenzend einen inneren Hohlraum (15), der an seinem oberen Teil offen ist, der abnehmbar unter der Brüheinheit (11) gekuppelt werden kann, und einen bewegbaren Filterträgerkörper (16), der durch den inneren Hohlraum (15) eingeführt werden kann und einen inneren Hohlraum (22) definiert, der ausgelegt ist, um ein Pad (17) zu halten, wobei der Griff (14) in verschiedene Betriebspositionen unter der Brüheinheit (11) verstellt werden kann und mit dem bewegbaren Filterträgerkörper (16) so kooperiert, dass dieser in einer vertikalen Richtung im inneren Hohlraum (15) verschoben wird, und zwar von einer abgesenkten Ausgangsposition in eine angehobene Endposition zusammen mit dem Pad (17) und umgekehrt, wobei die Brüheinheit (11) mit oberen Perforationsmitteln (59, 63) der oberen Wand des Pads (17) versehen ist und der bewegbare Filterträgerkörper (16) mit unteren Perforationsmitteln (41, 43) der unteren Wand des Pads versehen ist, wobei der bewegbare Filterträgerkörper (16) einen Anfangszustand aufweist, in dem er nicht mit der Brüheinheit (11) gekuppelt ist und in die abgesenkte Ausgangsposition verschoben wird, sodass ein Pad in seinen inneren Hohlraum (22) eingeführt wird, und einen weiteren gekuppelten Zustand unter der Brüheinheit (11) durch Verschieben des Griffs (14) in eine andere Position, wobei die obere und untere Wand des Pads (17) nicht von den entsprechenden oberen Perforationsmitteln (59, 63) und den unteren Perforationsmitteln (41, 43) perforiert werden, wobei der Griff (14) eine weitere Position aufweist, in der der bewegbare Filterträgerkörper (16) in eine angehobene Position verschoben wird, in der die obere Wand des Pads (17) durch die oberen Perforationsmittel (59, 63) perforiert wird, sodass die Maschine für die Zubereitung des gebrühten Getränks angeordnet wird, sodass beim Starten eines Brühzyklus heißes Wasser durch das Pad strömt und für einen bestimmten Zeitraum darin bleibt, um das gebrühte Getränk zuzubereiten und der Druck des heißen Wassers in dem Pad dessen untere Wand gegen die unteren Perforationsmittel (41, 43) drückt, wodurch diese Wand perforiert wird und das gebrühte Getränk, das erhalten wurde, entladen und nach unten geführt wird, wobei der bewegbare Filterträgerkörper (16) zudem einen verschobenen Zustand aufweist, wenn jeder Brühzyklus beendet ist, und zwar erneut in der abgesenkten Ausgangsposition, gelöst von der Brüheinheit (11), sodass das gebrauchte Pad herausgezogen wird und durch ein neues Pad für einen folgenden Brühzyklus ersetzt wird, **dadurch gekennzeichnet, dass** der bewegbare Filterträgerkörper (16) mit Abstufungen ausgebildet ist mit einem dünnen oberen zylindrischen Abschnitt (19) und einem darunter befindlichen unteren zylindrischen Abschnitt (21), verbunden mit dem vorhergehenden zylindrischen Abschnitt und aufweisend einen Durchmesser, der kleiner als dieser ist, der im inneren Hohlraum (15) des Hohlkörpers (13) untergebracht ist, und ein kurzes vertikales Mundstück (23), das sich vom unteren Abschnitt (21) nach unten erstreckt und mit einer darunter befindlichen Ausgusstülle (24) für das Ausgießen der gebrühten Getränke gekuppelt ist, wobei der bewegbare Filterträgerkörper (16) in den inneren Hohlraum (15) durch eine Scheibe (34) eingeführt wird, die ebenfalls in den inneren Hohlraum (15) eingesetzt ist, und getragen unter dem bewegbaren Filterträgerkörper, die mit ihrer äußeren kreisförmigen Oberfläche in den selben inneren Hohlraum und mit ihrer inneren kreisförmigen Oberfläche rund um den unteren zylindrischen Abschnitt (21) eingepasst werden kann.

2. Kaffeemaschine nach Anspruch 1, **dadurch gekennzeichnet, dass** im bewegbaren Filterträgerkörper (16), der in den inneren Hohlraum (15) eingesetzt ist, ein darüber befindlicher Zentrierring (44) für das Kuppeln mit der darüber befindlichen Brüheinheit (11) angebracht ist und auf diesem auch eine dünne ringförmige Dichtung (45) angebracht ist, die auf einer inneren flachen Abstufung (46) angeordnet ist und gegen diese drückt, die auf dem oberen zylindrischen Abschnitt (19) des bewegbaren Filterträgerkörpers (16) bereitgestellt ist, und definiert zwischen der oberen Durchgangsöffnung (20) und der unteren Durchgangsöffnung (22) des Filterträgerkörpers.

3. Kaffeemaschine nach Anspruch 2, **dadurch gekennzeichnet, dass** auf der äußeren Oberfläche des oberen zylindrischen Abschnitts (19) des bewegbaren Filterträgerkörpers (16) zwei vertikale geradlinige Rillen (26) bereitgestellt sind, die im 180°-Winkel voneinander beabstandet sind und mit zwei entsprechenden vertikalen geradlinigen Rillen (27) übereinstimmen, die entlang der inneren Wand des kreisförmigen Körpers (13) bereitgestellt sind, sodass die Rillen, wenn der bewegbare Filterträgerkörper (16) in den kreisförmigen Körper (13) eingesetzt wird, zwischen ihnen jeweilige Hohlräume bilden, in die ein entsprechender Zapfen (28) eingesetzt ist, sodass der bewegbare Filterträgerkörper (16) am stationären kreisförmigen Körper (13) gesichert wird, indem dessen Drehung vermieden wird und nur die Verschiebung in die vertikale Richtung von der abgesenkten Position in die angehobene Position und umgekehrt ermöglicht wird.

4. Kaffeemaschine nach Anspruch 3, **dadurch gekennzeichnet, dass** auf dem unteren zylindrischen Abschnitt (21) des bewegbaren Filterträgerkörpers (16) vier identische Rillen (29) ausgebildet sind, die im Winkel abstandsgleich voneinander sind und auf derselben Höhe entlang der äußeren Oberfläche angeordnet sind, wobei jede Rille (29) durch einen kurzen horizontalen geradlinigen Abschnitt (30) und einen geradlinigen, nach oben gerichteten Abschnitt (31) gebildet ist, endend mit einer jeweiligen gekrümmten Oberfläche (32, 33).

5. Kaffeemaschine nach Anspruch 4, **dadurch gekennzeichnet, dass** die Scheibe (34) entlang ihrer Umfangsoberfläche mit einer Reihe von Aussparungen (36) ausgebildet ist, die mindestens zwei leerlaufende, sich drehende Kugeln (39) aufnehmen, und einigen Kerben (37), verbunden mit diesen Aussparungen (36), wobei die einen Kugeln (39) gegen die Rillen (29) und die anderen gegen eine innere Bahn des zylindrischen Hohlkörpers (13) wirken, sodass die Drehung der Scheibe (34) und das reibungslose Gleiten des bewegbaren Filterträgerkörpers (16) von seiner abgesenkten zu seiner angehobenen Position und umgekehrt während der Verschiebung des Griffs (14) in dessen verschiedene Betriebspositionen ermöglicht werden.

6. Kaffeemaschine nach Anspruch 5, **dadurch gekennzeichnet, dass** der Griff (14) aus einem geradlinigen Kolben (47) besteht, untergebracht in einem Handgriff (48) und versehen mit einem Gewindeabschnitt (49) am Endabschnitt, gerichtet zum bewegbaren Filterträgerkörper, der durch eine seitliche Durchgangsöffnung (50) des Hohlkörpers (13) eindringt und in einem Gewindedurchgangsloch (51) der Scheibe (34) eingeschraubt ist.

7. Kaffeemaschine nach Anspruch 6, **dadurch gekennzeichnet, dass** der geradlinige Kolben (47) am Griff (14) gesichert ist und dessen Gewindeabschnitt (49) an einem Nocken (52) gesichert ist, wirkend durch Reibung gegen zwei entsprechende geneigte Ebenen (53, 54), gesichert an der äußeren Oberfläche des Hohlkörpers (13) während der Handhabung des Filterträgerkörpers, wobei der Kolbengewindeabschnitt (49) von mindestens einer Feder (55) umwickelt ist, untergebracht in einem entsprechenden kurzen verbreiterten Durchgangsloch (56) des Handgriffs (48), geformt mit einem verbreiterten Mundstück (57) zur Unterbringung des Nockens (52), wobei die Feder (55) mit ihren Endabschnitten gegen den Nocken (52) und eine Abstufung (58) im Handgriff (48) drückt, wobei die Anordnung so ausgestaltet ist, dass, wenn der Griff (14) in die der Anfangsrichtung entgegengesetzte Richtung verschoben wird, mit einer Drehung, die nur dann möglich ist, nachdem die Gegenkraft der Feder (55) überwunden wurde, die den Nocken (52) gegen die geneigten Ebenen (53, 54) drückt und daher den Griff (14) vom Hohlkörper (13) löst, die entsprechende Drehung der Scheibe (34) dafür sorgt, dass die Kugeln (39) in die Rillen (29) eingesetzt werden bis zur Endposition (32), in der der bewegbare Filterträgerkörper (16) dank der Zapfen (28), die dessen Drehung verhindern, angehoben wird, wobei dieses Anheben die Perforation der oberen Wand des Pads (17) durch die oberen Perforationsmittel (59, 63) bewirkt.

8. Kaffeemaschine nach Anspruch 7, **dadurch gekennzeichnet, dass** die oberen Perforationsmittel durch eine dünne kreisförmige Scheibe (59) gebildet sind, gesichert am unteren Teil der Brüheinheit (11) an deren Heißwasserzirkulationsleitungen (18) und versehen mit einer Vielzahl an Durchgangslöchern (60), ausgelegt, um vom Heißwasser durchquert zu werden und versehen mit einer Vielzahl an scharfen Spitzen (63), die nach unten gerichtet und ausgelegt sind, um die obere Wand des Pads (17) zu perforieren.

## Revendications

1. Machine à café comprenant une unité d'infusion et un porte-filtre pour dosettes, adapté pour loger une dosette correspondante, en matière plastique ou en papier, contenant la poudre de café ou tout autre type de boisson à obtenir par infusion et coopérant avec l'unité d'infusion de la machine à café, alimentée par de l'eau chauffée, à la température requise, dans au moins une chaudière ; ladite eau passant à travers la dosette pour obtenir la boisson infusée correspondante étant délivrée dans un récipient sous-jacent, étant pourvue de plus d'un corps creux (13) supporté par une poignée latérale (14) pouvant être saisie par l'utilisateur et délimitant une cavité interne (15) ouverte dans sa partie supérieure pouvant être accouplée de façon amovible au-dessous de ladite unité d'infusion (11), ainsi qu'un porte-filtre mobile (16) insérable à travers ladite cavité interne (15) et délimitant une cavité interne (22) adaptée pour accueillir une dosette (17), ladite poignée (14) pouvant se déplacer dans différentes positions fonctionnelles en-dessous de ladite unité d'infusion (11) et coopérant avec ledit porte-filtre mobile (16) de façon à déplacer ce dernier dans une direction verticale dans ladite cavité interne (15) d'une position basse de démarrage jusqu'à une position haute finale de celle-ci avec la dosette (17) et vice versa, ladite unité d'infusion (11) étant pourvue de moyens de perforation supérieurs (59, 63) de la paroi supérieure da dosette (17) et ledit porte-filtre mobile (16) étant pourvu de moyens de perforation inférieurs (41, 43) de la paroi inférieure de ladite dosette, ledit porte-filtre mobile (16) étant, dans une condition initiale, découplé de ladite unité d'infusion (11) et déplacé dans ladite position basse de démarrage de sorte à introduire une dosette dans sa cavité interne (22), et dans une autre condition, accouplé en-dessous de ladite unité d'infusion (11) en déplaçant ladite poignée (14) dans l'autre position, dans la condition où les parois supérieure et inférieure da dosette (17) ne sont pas perforées par les moyens de perforation correspondants (59, 63) et les moyens de perforation inférieurs (41, 43) ; ladite poignée (14) ayant une position supplémentaire, dans la condition où ledit porte-filtre mobile (16) est déplacé dans une position haute dans laquelle ladite paroi supérieure da dosette (17) est perforée par lesdits moyens de perforation supérieurs (59, 63) de sorte à disposer la machine pour préparer la boisson infusée, de sorte que lorsqu'un cycle d'infusion commence, l'eau chaude pénètre à travers la dosette et continue à y rester pendant une durée déterminée pour préparer la boisson infusée et la pression de l'eau chaude dans la dosette pousse la paroi inférieure de cette dernière contre lesdits moyens de perforation inférieurs (41, 43), perforant ainsi la paroi et déchargeant et délivrant vers le bas la boisson infusée ayant été obtenue ; ledit porte-filtre mobile (16) ayant de plus une condition déplacée, lorsque chaque cycle d'infusion se termine, à nouveau dans ladite position basse de démarrage, desserrée de ladite unité d'infusion (11), de manière à extraire la dosette usagée et à la remplacer par une nouvelle dosette pour un cycle d'infusion suivant, **caractérisée en ce que** ledit porte-filtre mobile (16) est réalisé avec des gradins, avec une partie cylindrique supérieure mince (19) et une partie cylindrique inférieure sous-jacente (21) raccordée à la précédente partie cylindrique et ayant un diamètre inférieur à celle-ci qui sont logées dans ladite cavité interne (15) dudit corps creux (13) et un embout vertical court (23) développé vers le bas à partir de ladite partie inférieure (21) et accouplé à un bec sous-jacent (24) permettant de délivrer les boisons infusées, ledit porte-filtre mobile (16) étant introduit dans ladite cavité interne (15) à travers une rondelle (34), insérée aussi dans ladite cavité interne (15) et supportée en-dessous du porte-filtre mobile pouvant s'adapter avec sa surface circulaire externe dans la même cavité interne et avec sa surface circulaire interne autour de ladite partie cylindrique inférieure (21).

2. Machine à café selon la revendication 1, **caractérisée en ce que** dans ledit porte-filtre mobile (16), inséré dans ladite cavité interne (15), est appliqué un anneau de centrage superposé (44) pour l'assemblage à ladite unité d'infusion superposée (11) et il est également appliqué sur le même porte-filtre un joint annulaire mince (45) étant disposé sur, et pressé contre un gradin interne plat (46) prévu sur ladite partie cylindrique supérieure (19) du porte-filtre mobile (16) et défini entre l'ouverture de passage supérieure (20) et l'ouverture de passage inférieure (22) dudit porte-filtre.

3. Machine à café selon la revendication 2, **caractérisée en ce que** sur la surface externe de ladite partie cylindrique supérieure (19) dudit porte-filtre mobile (16) sont prévues deux rainures rectilignes verticales (26), éloignées l'une de l'autre selon un angle de 180° et coïncidant avec deux rainures rectilignes verticales correspondantes (27) prévues le long de la paroi interne dudit corps circulaire (13) de manière à ce que lorsque ledit porte-filtre mobile (16) est inséré dans ledit corps circulaire (13), les rainures définissent entre elles des cavités respectives dans lesquelles une broche correspondante (28) est insérée de manière à fixer ledit porte-filtre mobile (16) au dit corps circulaire immobile (13) en empêchant sa rotation et en ne permettant que le déplacement dans la direction verticale de sa position basse vers sa position haute et vice versa.

4. Machine à café selon la revendication 3, **caractérisée en ce que** sur ladite partie cylindrique inférieure (21) dudit porte-filtre mobile (16) sont prévues quatre rainures identiques (29), équidistantes de façon angulaire les unes des autres et situées à la même hauteur le long de la surface externe, dans laquelle chaque rainure (29) est formée d'une partie rectiligne horizontale courte (30) et d'une partie rectiligne inclinée vers le haut (31), terminant par une surface courbe respective (32, 33).

5. Machine à café selon la revendication 4, **caractérisée en ce que** ladite rondelle (34) dispose le long de sa surface périphérique d'un ensemble de reliefs (36) logeant au moins deux billes rotatives libres (39) et plusieurs renfoncements (37) reliés auxdits reliefs (36), lesdites billes (39) agissant, l'une contre lesdites rainures (29) et l'autre contre une bague intérieure dudit corps cylindrique creux (13) de sorte à permettre la rotation de ladite rondelle (34) et le coulissement sans frottement dudit porte-filtre mobile (16) de sa position basse à sa position haute et vice versa, lors du déplacement de ladite poignée (14) dans ses différentes positions fonctionnelles.

6. Machine à café selon la revendication 5, **caractérisée en ce que** ladite poignée (14) est constituée d'une tige rectiligne (47) logée dans un corps de poignée (48) et pourvue d'une partie filetée (49), sur la portion d'extrémité tournée vers ledit porte-filtre mobile, qui pénètre à travers une ouverture de passage latérale (50) dudit corps creux (13) et est vissée dans un orifice de passage fileté (51) de ladite rondelle (34).

7. Machine à café selon la revendication 6, **caractérisée en ce que** ladite tige rectiligne (47) est fixée à ladite poignée (14) et sa partie filetée (49) est fixée à une came (52) agissant par frottement contre deux plans inclinés correspondants (53, 54) fixés à la surface externe dudit corps creux (13) lors de la manipulation du porte-filtre, ladite partie filetée de la tige (49) étant enroulée par au moins un ressort (55) logé dans un petit orifice de passage élargi correspondant (56) dudit corps de poignée (48) disposant d'un embout élargi (57) pour loger ladite came (52), ledit ressort (55) s'appuyant avec ses portions d'extrémité contre ladite came (52) et un gradin (58) à l'intérieur dudit corps de poignée (48), la disposition étant telle que lorsque ladite poignée (14) est déplacée dans la direction opposée à celle initiale avec une rotation, rendue possible uniquement après que la contre-force dudit ressort (55) ait été dépassée, qui pousse ladite came (52) contre lesdits plans inclinés (53, 54) et desserre donc ladite poignée (14) à partir dudit corps creux (13), la rotation résultant de ladite rondelle (34) force lesdites billes (39) à coulisser dans lesdites rainures (29) jusqu'à la position finale (32) dans laquelle ledit porte-filtre mobile (16) s'élève grâce auxdites broches (28) empêchant sa rotation et telle élévation détermine la perforation de la paroi supérieure de ladite dosette (17) par lesdits moyens de perforation supérieurs (59, 63).

8. Machine à café selon la revendication 7, **caractérisée en ce que** les moyens de perforation supérieurs sont constitués d'un disque circulaire fin (59) fixé à la partie inférieure de ladite unité d'infusion (11), en correspondance de ses conduits de circulation (18) d'eau chaude et pourvu d'une pluralité de trous de passage (60) pouvant être traversés par l'eau chaude et pourvu d'une pluralité de pointes affilées (63), orientées vers le bas, pouvant perforer la paroi supérieure de ladite dosette (17).
